# EUROPEAN PATENT APPLICATION

(11) **EP 4 661 175 A1**
(43) Date of publication of application: **10.12.2025**
(21) Application number: 24843427.6
(22) Date of filing: 11.07.2024
(51) Int. Cl.: H01M 50/207, H01M 50/264, H01M 10/04

(54) **SECONDARY BATTERY MODULE FRAME AND SECONDARY BATTERY MODULE COMPRISING SAME**

(30) Priority: 17.07.2023 KR 20230092516
(71) Applicant: LG Energy Solution, Ltd., Seoul 07335 (KR)
(72) Inventor: LIM, Jeong Hoon, Daejeon 34122 (KR); YOON, Hyoung Chul, Daejeon 34122 (KR)
(74) Representative: Plasseraud IP
(86) International application number: PCT/KR2024/009956
(87) International publication number: WO 2025/018709

(57) **Abstract**

The present disclosure relates to a secondary battery module frame, and provides the secondary battery module frame that includes a body having a receiving space formed therein; and a plurality of exposure holes penetrating one surface of the body and provided to expose the receiving space, wherein in the exposure hole, a matte portion formed along the perimeter of the inner surface of the exposure hole and diffusely reflecting light incident on the inner surface of the exposure hole is formed.

## Description

### TECHNICAL FIELD

### CROSS-REFERENCE TO RELATED APPLICATIONS

The present application claims priority to Korean Patent Application No. 10-2023-0092516 filed on July 17, 2023 in the Republic of Korea, the disclosures of which are incorporated herein by reference.

### TECHNICAL FIELD

The present disclosure relates to a secondary battery module frame and a secondary battery module including the same, and more specifically, to a secondary battery module frame capable of diffusely reflecting light incident on the inner surface of the exposure hole of the secondary battery module frame and a secondary battery module including the same.

### BACKGROUND ART

A secondary battery is a battery that can be charged and discharged, unlike a primary battery that cannot be recharged. The secondary battery is highly applicable to a variety of product groups and has electrical characteristics with high energy density. Such a secondary battery is applied not only to portable electronic devices but also to electric vehicles, hybrid electric vehicles, power storage devices, or the like driven by electric power sources. The secondary battery is attracting attention as a new energy source to improve eco-friendliness and energy efficiency in that it has not only a primary advantage of dramatically reducing the use of fossil fuels, but also no by-products generated from the use of energy.

Medium and large devices such as electric vehicles require a secondary battery having high power and large capacity, and a plurality of secondary battery modules in which a plurality of secondary batteries are electrically connected are used. Such a secondary battery module is preferably manufactured in a small size and weight as possible, and a prismatic secondary battery, a pouch-type secondary battery and a cylindrical secondary battery that have a small weight-to-capacity are mainly used.

Additionally, the process of manufacturing the secondary battery module is automated, and the secondary battery module manufacturing device secures a visual image using a vision device and then performs the process. In particular, in the cylindrical secondary battery module manufacturing process, the wire bonding process connecting the electrode terminal and the busbar is performed through a small hole formed in the secondary battery module, which requires precise work, and there is a problem of causing errors in the wire bonding position since the boundary surface of the hole appears unclear due to the light reflected from the hole in the image photographed by the vision device. Accordingly, there is a need to develop a technology to solve the above problem.

### SUMMARY

### TECHNICAL PROBLEM

The present disclosure is designed to solve the above problem, and therefore the present disclosure is directed to providing a secondary battery module frame that diffusely reflects light incident on the inner surface of the exposure hole to clearly form the boundary of the inner area of the exposure hole exposing the receiving space in the image or video generated by photographing the secondary battery module frame with a photographing device, and a secondary battery module including the same.

### TECHNICAL SOLUTION

As Embodiment 1 of the present disclosure, the present disclosure provides a secondary battery module frame including a body having a receiving space formed therein; and a plurality of exposure holes penetrating one surface of the body and provided to expose the receiving space, wherein in the exposure hole, a matte portion formed along the perimeter of the inner surface of the exposure hole and diffusely reflecting light incident on the inner surface of the exposure hole is formed.

Additionally, in the matte portion, a first uneven surface having an irregular pattern may be formed.

Additionally, the first uneven surface may have an average surface roughness of 0.35 µm to 3.00 µm.

Additionally, the matte portion may have a lower luminance compared to the surface adjacent to the exposure hole.

Additionally, the plurality of exposure holes may form a plurality of exposure hole lines in which the exposure holes are arranged in a row along a first direction on one surface of the body, and the plurality of exposure hole lines may be arranged in a second direction perpendicular to the first direction.

Additionally, a busbar groove recessed to a predetermined depth along the first direction may be formed between the exposure hole line and the exposure hole line adjacent thereto.

Additionally, the exposure hole may be injection molded by a mold having a protrusion formed on one surface to form the exposure hole, and in the protrusion, a second uneven surface may be formed along the perimeter of the outer surface.

Additionally, the first uneven surface may be formed as a surface corresponding to the second uneven surface.

Additionally, the second uneven surface may have an average surface roughness of 0.35 µm to 3.00 µm.

Additionally, the second uneven surface may be formed by chemically corroding the surface of the protrusion.

Additionally, the second uneven surface may be formed by electrically discharge machining the surface of the protrusion.

As Embodiment 2 of the present disclosure, the present disclosure provides a secondary battery module including a plurality of secondary batteries; a body accommodating the plurality of secondary batteries in an internal receiving space; and a plurality of exposure holes penetrating one surface of the body and exposing electrode terminals of the secondary battery, wherein in the exposure hole, a matte portion formed along the perimeter of the inner surface of the exposure hole and diffusely reflecting light incident on the inner surface of the exposure hole is formed.

Additionally, the secondary battery module may further include a wire whose one end is bonded to an electrode terminal of the secondary battery, wherein the wire is bonded to a position spaced apart by a predetermined distance from the inner surface of the exposure hole in an inward direction.

Additionally, the secondary battery module may further include a busbar located on one surface of the body and disposed to be adjacent to the exposure hole.

Additionally, the wire may penetrate the exposure hole, and the other end thereof may be bonded to the busbar.

### ADVANTAGEOUS EFFECTS

In the secondary battery module frame of the present disclosure, a matte portion diffusely reflecting light on the inner surface of the exposure hole that exposes the internal receiving space is formed, so that the quality of the image may be improved by clarifying the boundary of the exposure hole in the image of the secondary battery module photographed through a vision inspection device in the manufacturing process of the secondary battery module, and the accuracy of the bonding position of the wire on the electrode terminal may be improved in the process of bonding the wire to the electrode terminal of the secondary battery through the exposure hole.

### BRIEF DESCRIPTION OF THE DRAWINGS

FIG. 1 is a perspective view showing the external shape of a secondary battery module frame according to Embodiment 1 of the present disclosure.
FIG. 2 is an enlarged perspective view showing the area 'A' of FIG. 1 according to Embodiment 1 of the present disclosure.
FIG. 3 is a cross-sectional view schematically showing a first uneven surface formed in a matte portion according to Embodiment 1 of the present disclosure.
FIG. 4 is a cross-sectional view showing a state where a matte portion is injection molded by a first mold and a second mold.
FIG. 5 is a perspective view showing a secondary battery module according to Embodiment 2 of the present disclosure.
FIG. 6 is an enlarged perspective view showing the area 'B' of FIG. 5 according to Embodiment 2 of the present disclosure.
FIG. 7 is an image generated by actually photographing the exposure hole with a vision inspection device, wherein (a) is an image showing that the boundary of the exposure hole is unclear in case of no matte portion, and (b) is an image showing that the boundary of the exposure hole is clear by forming a matte portion on the inner surface of the exposure hole.

### DETAILED DESCRIPTION

Hereinafter, preferred embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

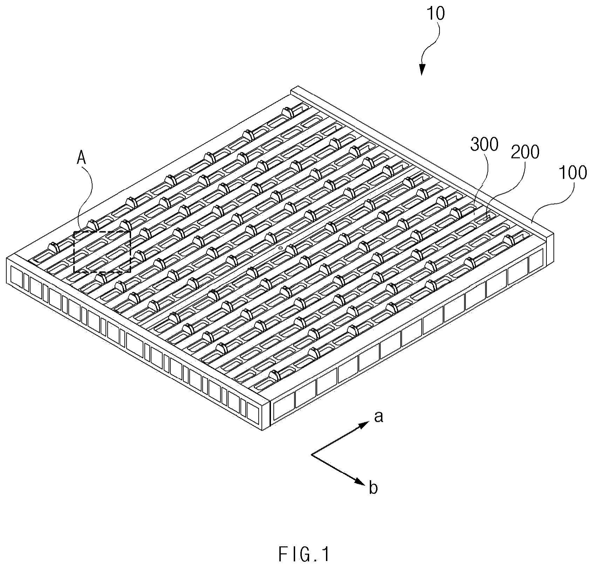

Referring to FIG. 1, as Embodiment 1 of the present disclosure, the secondary battery module frame 10 may include a body 100 and an exposure hole 200.

The body 100 may form the overall external shape of the secondary battery module frame 10, and a receiving space may be formed therein to accommodate the secondary batteries 500.

A plurality of secondary batteries 500 may be accommodated in the receiving space of the body 100, and the plurality of secondary batteries 500 accommodated in the receiving space may be arranged according to a predetermined arrangement method.

The body 100 may be formed of a durable material so as not to be damaged by the heat generated by the secondary batteries 500, and may include, for example, but not limited to, one or more polymer materials among polypropylene (PP), polycarbonate (PC), ABS resin, polyethylene terephthalate (PET), polyethylene (PE), acrylic resin, and polyvinyl chloride (PVC).

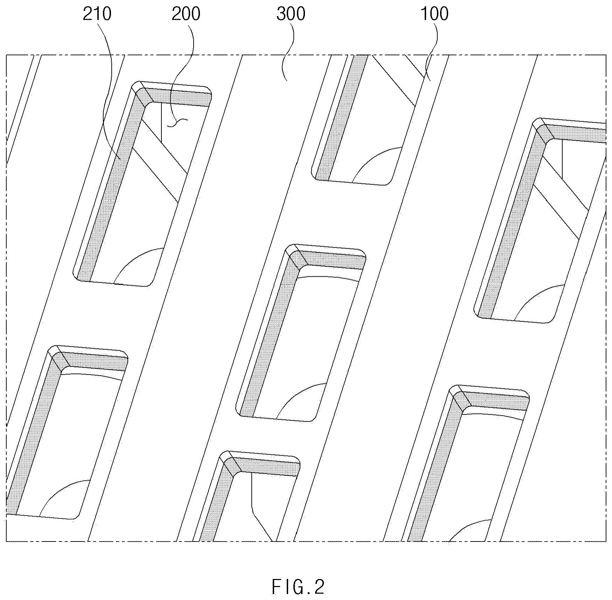

Referring to FIG. 2, the exposure hole 200 may be formed to penetrate one surface of the body 100 so as to expose the receiving space of the body 100 to the outside. A plurality of secondary batteries 500 accommodated in the receiving space may be exposed through the exposure hole 200. More specifically, the exposure hole 200 is formed to penetrate one surface of the body 100 facing the positive electrode terminal of the secondary battery 500 accommodated in the body 100, and the exposure hole 200 may expose the electrode terminals to the outside when the secondary batteries 500 are accommodated in the receiving space of the body 100. Therefore, it is possible to identify whether the secondary batteries 500 accommodated in the receiving space are properly disposed and the positions of the electrode terminals of the positive electrode and negative electrode through the exposure hole 200 formed on one surface of the body 100.

The exposure hole 200 may have any shape as long as it penetrates the body 100 to expose the receiving space to the outside, and may be, for example, rectangular, circular, oval, semicircular, or the like.

The exposure hole 200 may be formed in plurality on one surface of the body 100 to expose each of the plurality of secondary batteries 500 accommodated in the receiving space.

The plurality of exposure holes 200 may form one or more exposure hole 200 lines in a row along the first direction a on one surface of the body 100. Since the exposure hole 200 line is disposed along the direction in which the secondary batteries 500 disposed in the receiving space are arranged in a row, it is possible to check whether each placement of the plurality of secondary batteries 500 is correct through the exposure hole 200, and the electrode terminals of the plurality of secondary batteries 500 disposed along the exposure hole 200 line may be exposed to the outside.

The exposure hole 200 line may be formed in plurality, and the plurality of exposure hole 200 lines may be arranged in a second direction b perpendicular to the first direction a.

Referring to FIG. 2, in the exposure hole 200, a matte portion 210 formed along the perimeter of the inner surface of the exposure hole 200 and diffusely reflecting light incident on the inner surface of the exposure hole 200 may be formed. The inner surface of the exposure hole 200 may form a boundary of the exposure hole 200.

A busbar groove 300 recessed to a predetermined depth may be formed on one surface of the body 100 so that the busbar may be inserted at a position adjacent to the exposure hole line. The busbar groove 300 may be formed between a plurality of adjacent exposure hole lines. The busbar groove 300 may be formed along the first direction a like the exposure hole line.

Since the matte portion 210 diffusely reflects light incident on the inner surface of the exposure hole 200 in all directions, it may be an area that is darker and less glossy than the surrounding area of the exposure hole 200.

When manufacturing the secondary battery module 11, it is necessary to check whether the secondary batteries 500 are accurately arranged in the receiving space of the secondary battery module frame 10, which may be performed by an operator's direct visual inspection or through a vision inspection device. The vision inspection device may automatically determine whether the secondary batteries 500 disposed in the receiving space of the secondary battery module frame 10 are accurately arranged through an image or video generated by photographing the secondary battery module 11 being manufactured, the positions of the electrode terminals of the negative electrode and positive electrode of the secondary batteries 500, the boundary between the electrode terminals of the negative electrode and positive electrode of the secondary batteries 500, and the appropriate position at which the wire 700 is to be bonded to the electrode terminals of the secondary batteries 500. In particular, the vision inspection device may obtain image data regarding the boundary surface of the exposure hole 200 and the appearance of the secondary battery 500 exposed through the exposure hole 200 by photographing the exposure hole 200.

However, when the vision inspection device photographs the exposure hole 200 without the matte portion 210 on the inner surface, light reflection occurs by the inner surface of the exposure hole 200, and the reflected light flows into the vision inspection device, so that the image or video generated by the vision inspection device may be unclear, such as blurred or double representation of the boundary of the exposure hole 200.

To solve this problem, the matte portion 210 may diffusely reflect light incident on the matte portion 210 to minimize the amount of light reflected from the matte portion 210 entering the vision inspection device, so that the image or video generated by the vision inspection device may darken the matte portion 210 forming the boundary of the exposure hole 200, thereby clearly indicating the boundary of the exposure hole 200.

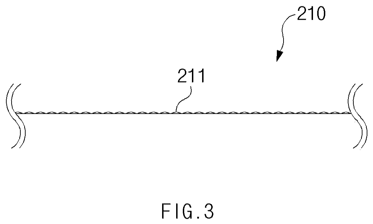

Referring to FIG. 3, in the matte portion 210, a first uneven surface 211 having an irregular shape and pattern on its surface may be formed so as to diffusely reflect light incident on the matte portion 210. The first uneven surface 211 may have an average surface roughness Ra of 0.35 µm to 3.00 µm, which may form a matte surface so that the boundary of the exposure hole 200 appears clearly and distinctly in the image or video generated by the vision inspection device.

The first uneven surface 211 may be formed in an irregular pattern of a plurality of atypical protrusions and atypical grooves, and the atypical protrusions and atypical grooves may be formed in a size to satisfy an average surface roughness Ra of 0.35 µm to 3.00 µm.

Since the matte portion 210 diffusely reflects the incident light, a lower luminance is formed compared to the surface adjacent to the exposure hole 200, which may solve the problem that the boundary of the exposure hole 200 becomes unclear due to the light reflected from the matte portion 210 in the image or video generated by the vision inspection device.

The body 100 may be manufactured by melting and injecting a polymer material between a first mold 400 and a second mold 420 and then cooling it. In this case, the exposed groove may be injection molded by the first mold 400 in which a protrusion 410 protruding at a predetermined height on one surface is formed, and the second mold 420 in which a shape corresponding to the shape of the end of the protrusion 410 is formed so that the protrusion 410 may be inserted.

In the protrusion 410, a second uneven surface 411 may be formed on the surface along the perimeter of the outer surface. The second uneven surface 411 may have an average surface roughness of 0.35 µm to 3.00 µm.

The second uneven surface 411 is formed in an irregular pattern, and a plurality of atypical protrusions and atypical grooves may be formed in an irregular pattern, and the atypical protrusions and atypical grooves may be formed in a size to satisfy an average surface roughness of 0.35 µm to 3.00 µm.

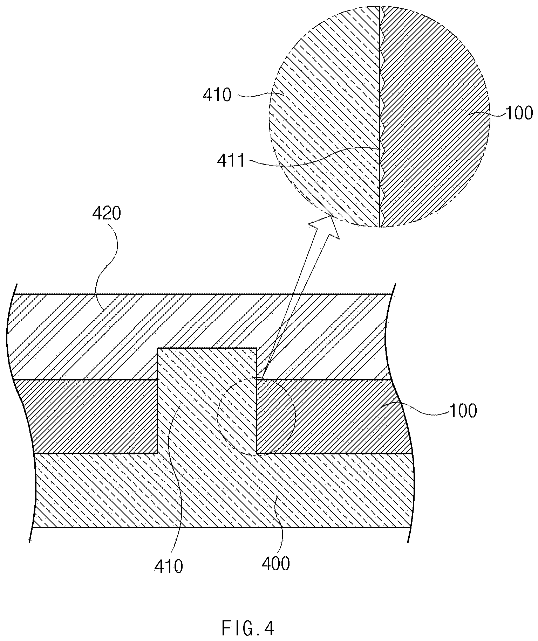

Referring to FIG. 4, the exposure hole 200 may be injection molded by the protrusion 410 formed in the first mold 400 and the second mold 420 having a groove into which the end of the protrusion 410 may be inserted, and the first uneven surface 211 formed on the outer surface of the matte portion 210 may be injection molded by the second uneven surface 411 formed on the outer surface of the protrusion 410. That is, the first uneven surface 211 may be formed as a surface corresponding to the second uneven surface 411.

The surface forming the roughness of the second uneven surface 411 formed on the surface of the protrusion 410 may be formed by various methods. For example, the second uneven surface 411 may be formed, but is not limited thereto, by chemically corroding the outer surface of the protrusion 410 to form a plurality of atypical protrusions and atypical grooves on the surface of the protrusion 410, by electrically discharge machining the surface of the protrusion 410, and the like.

### Embodiment 2

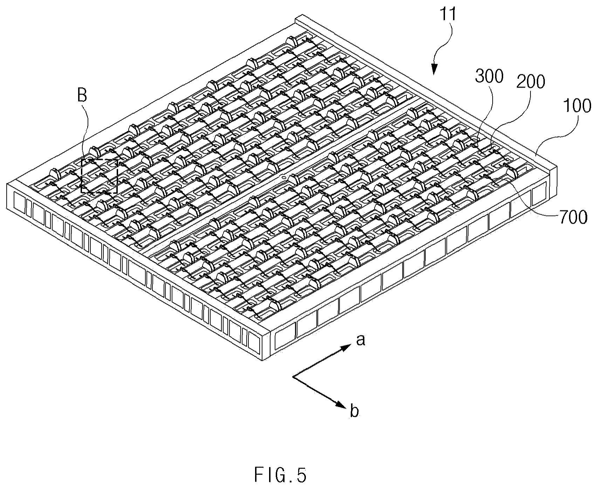

Referring to FIG. 5, as Embodiment 2 of the present disclosure, the secondary battery module 11 may include a secondary battery 500, a body 100, and an exposure hole 200.

Additionally, the secondary battery module 11 may further include a busbar 600 and a wire 700.

The secondary battery module 11 may refer to a state in which a plurality of secondary batteries 500 are accommodated in the secondary battery module frame 10, and the content regarding the secondary battery module frame 10 may be replaced by the contents described in Embodiment 1 above.

The secondary battery 500 may have various shapes, such as pouch-type, prismatic and cylindrical, and may preferably be a cylindrical secondary battery.

The cylindrical secondary battery 500 may include a battery can (not shown), a cap assembly (not shown) and an electrode assembly (not shown).

The cap assembly seals an opening of the battery can and may include a positive electrode terminal and a safety vent.

The positive electrode terminal may be electrically connected to a positive pin of the electrode assembly to be described later to form a positive pole. The positive electrode terminal may have a shape located at the center of the cap assembly and protruding toward the outside of the secondary battery 500.

When high-pressure gas is generated inside the secondary battery due to abnormal current and the internal pressure rises, the safety vent may rupture and exhaust the gas to the outside of the secondary battery. The safety vent may be formed including a metal material.

The battery can may be a cylindrical can having an opening formed on one surface and a receiving space formed therein, an electrode assembly and an electrolyte may be accommodated in the receiving space, and a cap assembly may be coupled to the opening to seal the battery can.

The battery can may be formed of a conductive metal material such as aluminum, nickel, stainless steel, or an alloy thereof.

A beading portion recessed from the outside to the inside of the battery can and a crimping portion for sealing the battery can may be formed at the top of the battery can.

The electrode assembly may include a structure stacked in the following order: positive electrode current collector / positive electrode active material layer / separator / negative electrode active material layer / negative electrode current collector. The positive electrode current collector includes an area coated with a positive electrode active material layer and an uncoated positive electrode uncoated area, and the positive electrode uncoated area may function as a positive electrode tab. The negative electrode current collector includes an area coated with a negative electrode active material layer and an uncoated negative electrode uncoated area, and the negative electrode uncoated area may function as a negative electrode tab. The separator may be disposed between the positive electrode current collector and the negative electrode current collector to prevent current collectors of different polarities from contacting each other. The electrode assembly may include a jelly roll formed by winding the stacked structure.

In the electrode assembly forming the jelly roll, the upper end of the positive electrode uncoated portion may be bonded to the positive electrode pin to be electrically connected to the cap assembly, and the lower end of the negative electrode uncoated portion may be coupled to the negative electrode pin to be electrically connected to the battery can. The battery can that is electrically connected to the negative electrode pin may itself become a negative electrode terminal.

That is, the electrode terminal may refer to the positive electrode terminal of the cap assembly and the battery can that is a negative electrode terminal in itself.

The secondary battery 500 may be accommodated in the receiving space of the body so that the positive electrode terminal faces the exposure hole 200.

The busbar 600 may be formed of an electrically conductive metal material to electrically connect a plurality of secondary batteries 500 and a circuit board.

The busbar 600 may be located on one surface of the body 100. More specifically, the busbar 600 may be inserted into the busbar groove 300 formed to be recessed to a predetermined depth on one surface of the body 100. The depth of the busbar groove 300 may be formed to be the same as or similar to the thickness of the busbar 600.

The busbar 600 may be disposed adjacent to the exposure hole 200 to be easily connected to the secondary batteries 500 through the exposure hole 200. More specifically, the busbar 600 is disposed between any one exposure hole 200 line and the exposure hole 200 line closest thereto, and may be disposed along the exposure hole 200 line in the first direction a, which is the placement direction of the exposure hole 200 line, as in the length direction.

The busbar 600 may be provided in plurality, and the plurality of busbars 600 may be disposed respectively between each exposure hole 200 line and its adjacent exposure hole 200 line along the second direction b, which is perpendicular to the first direction a.

The busbar 600 may be formed in a rectangular shape having a narrower width relative to its length so that it may be disposed along the exposure hole 200 line.

The busbar 600 may be electrically connected through a wire 700 to the electrode terminal of the secondary battery 500 exposed through the exposure hole 200. Since the busbar 600 is formed in a long rectangular shape along the length direction of the exposure hole 200 line, a plurality of wires 700 penetrating each exposure hole 200 forming the exposure hole 200 line may be bonded.

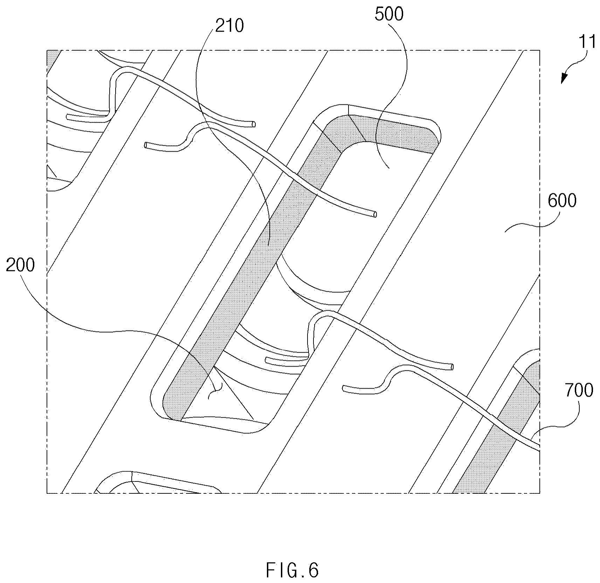

Referring to FIG. 6, the wire 700 penetrates the exposure hole 200, so that one end thereof may be bonded to the electrode terminal of the secondary battery 500 and the other end thereof may be bonded to the busbar 600, thereby electrically connecting the busbar 600 and the electrode terminal of the secondary battery 500.

The wire 700 may be formed of an electrically conductive metal material to electrically connect the busbar 600 and the secondary battery 500.

The wire 700 may be bonded to the busbar 600 and the secondary battery 500 by welding, soldering, or the like.

The wire 700 bonded to the positive electrode terminal of the secondary battery 500 may penetrate the exposure hole 200 and be bonded to the busbar 600 located on one side of the exposure hole 200, and the wire 700 bonded to the negative electrode terminal of the secondary battery 500 may penetrate the exposure hole 200 and be bonded to the busbar 600 located on the other side of the exposure hole 200.

Bonding of the wire 700 may be performed by an operator under direct observation of the exposure hole 200 or by a wire bonding device. One end of the wire 700 may be bonded at a position spaced apart by a predetermined distance from the inner surface of the exposure hole 200 in an inward direction with respect to the surface extending toward the secondary battery 500.

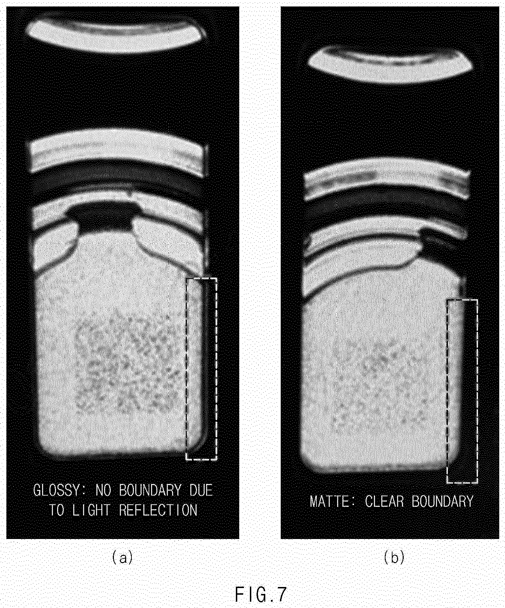

Referring to FIG. 7 (a) and (b), when the wire bonding device bonds one end of the wire 700 to the electrode terminal of the secondary battery 500, the bonding position is determined through the image or video generated by the vision inspection device, and the position where the wire 700 is to be bonded may be determined as a previously input position among the electrode terminal areas of the secondary battery 500 exposed through the exposure hole 200. More specifically, the wire bonding device inputs the position where the wire 700 is to be bonded as a position spaced apart by a predetermined distance in an inward direction from the inner surface of the exposure hole 200, so that if the boundary of the exposure hole 200 becomes unclear in the image or video generated by the vision inspection device, the wire bonding device may not accurately calculate the position where the wire 700 is to be bonded, which may cause an error in the process of bonding the wire 700. Additionally, in the cylindrical secondary battery 500, both the positive electrode terminal of the cap assembly and the negative electrode terminal of the battery can face the exposure hole 200, so that when the wire 700 is bonded to the electrode terminal, it should be accurately bonded to a specific position of the targeted electrode terminal to avoid a short-circuit of the negative electrode and the positive electrode.

The vision inspection device may be disposed to photograph one surface of the secondary battery module 11 from directly above the one surface where the exposure hole 200 is formed in the secondary battery module 11. Since the vision inspection device photographs the exposure hole 200 from above the exposure hole 200, the inner surface of the exposure hole 200 may form a boundary of the exposure hole 200 in the image or video of the exposure hole 200 generated by the vision inspection device. Therefore, a matte portion 210 that diffusely reflects the incident light along the perimeter of the inner surface of the exposure hole 200 may be formed so that the boundary of the exposure hole 200 is clearly visible in the image or video.

The matte portion 210 may diffusely reflect the incident light and appear darker than the outer area of the exposure hole 200 in the image or video generated by the vision inspection device, thereby forming a clear boundary of the exposure hole 200. Additionally, the matte portion 210 does not interfere with the light reflected from the electrode terminal area of the secondary battery 500 located in the inner area of the exposure hole 200 in the image or video generated by the vision inspection device, so that the appearance of the electrode terminals of the secondary battery 500 may be clearly displayed in the image or video without distortion. Through this, the wire bonding device may calculate a position where one end of the wire 700 is to be bonded to the electrode terminal of the secondary battery 500, and may accurately bond the wire 700 to the position.

### Embodiment 3

As Embodiment 3 of the present disclosure, the vision system may include secondary battery modules 10, 11 and a vision device (not shown). Details about the secondary battery modules 10, 11 may be replaced by Embodiment 1 and Embodiment 2 described above.

The vision device (not shown) may be configured to photograph one surface of the secondary battery modules 10, 11 and output a visual image. The image photographed and displayed by the vision device may include a plurality of exposure holes, an arrangement state of secondary batteries visible through the plurality of exposure holes, an area of an electrode lead, and the like. The device for bonding wires may recognize the boundary surface of the exposure hole, the area of the positive electrode lead and the area of the negative electrode from the image photographed by the vision device, and may bond the wires to the area of the electrode lead calculated in advance from the recognized boundary surface of the exposure hole.

FIG. 7(a) shows an actual image of the exposure hole photographed by the vision device when the inner surface of the exposure hole is glossy, and FIG. 7(b) shows an actual image of the exposure hole photographed by the vision device when a matte portion is formed on the inner surface of the exposure hole. In FIG. 7(a), the boundary of the exposure hole appears to be overlapped in the image, so the boundary appears unclear, but in FIG. 7(b), it can be seen that the boundary of the exposure hole 200 is clarified because light is diffusely reflected by the matte portion 210 formed along the perimeter of the inner surface of the exposure hole 200.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [LIST OF REFERENCE NUMERALS]

10: Secondary battery module frame
11: Secondary battery module
100: Body
200: Exposure hole
210: Matte portion
211: First uneven surface
300: Busbar groove
400: First mold
410: Protrusion
411: Second uneven surface
420: Second mold
500: Secondary battery
600: Busbar
700: Wire
a: First direction
b: Second direction

## Claims

1. A secondary battery module frame comprising:
a body having a receiving space formed therein; and
a plurality of exposure holes penetrating one surface of the body and provided to expose the receiving space,
wherein in the exposure hole,
a matte portion formed along the perimeter of the inner surface of the exposure hole and diffusely reflecting light incident on the inner surface of the exposure hole is formed.

2. The secondary battery module frame according to claim 1,
wherein in the matte portion,
a first uneven surface having an irregular pattern is formed.

3. The secondary battery module frame according to claim 2,
wherein the first uneven surface has an average surface roughness of 0.35 µm to 3.00 µm.

4. The secondary battery module frame according to claim 2,
wherein the matte portion has a lower luminance compared to the surface adjacent to the exposure hole.

5. The secondary battery module frame according to claim 1,
wherein the plurality of exposure holes form a plurality of exposure hole lines in which the exposure holes are arranged in a row along a first direction on one surface of the body, and
the plurality of exposure hole lines are arranged in a second direction perpendicular to the first direction.

6. The secondary battery module frame according to claim 5,
wherein a busbar groove recessed to a predetermined depth along the first direction is formed between the exposure hole line and the exposure hole line adjacent thereto.

7. The secondary battery module frame according to claim 2,
wherein the exposure hole is injection molded by a mold having a protrusion formed on one surface to form the exposure hole, and
in the protrusion,
a second uneven surface is formed along the perimeter of the outer surface.

8. The secondary battery module frame according to claim 7,
wherein the first uneven surface is formed as a surface corresponding to the second uneven surface.

9. The secondary battery module frame according to claim 7,
wherein the second uneven surface has an average surface roughness of 0.35 µm to 3.00 µm.

10. The secondary battery module frame according to claim 9,
wherein the second uneven surface is formed by chemically corroding the surface of the protrusion.

11. The secondary battery module frame according to claim 9,
wherein the second uneven surface is formed by electrically discharge machining the surface of the protrusion.

12. A secondary battery module comprising:
a plurality of secondary batteries;
a body accommodating the plurality of secondary batteries in an internal receiving space; and
a plurality of exposure holes penetrating one surface of the body and exposing electrode terminals of the secondary battery,
wherein in the exposure hole,
a matte portion formed along the perimeter of the inner surface of the exposure hole and diffusely reflecting light incident on the inner surface of the exposure hole is formed.

13. The secondary battery module according to claim 12, further comprising:
a wire whose one end is bonded to an electrode terminal of the secondary battery,
wherein the wire is bonded to a position spaced apart by a predetermined distance from the inner surface of the exposure hole in an inward direction.

14. The secondary battery module according to claim 13, further comprising:
a busbar located on one surface of the body and disposed to be adjacent to the exposure hole.

15. The secondary battery module according to claim 14,
wherein the wire penetrates the exposure hole, and the other end thereof is bonded to the busbar.

16. A vision system comprising:
a secondary battery module; and
a vision device that photographs one surface of the secondary battery module and outputs a visual image.
wherein the secondary battery module comprises:
a body having a receiving space formed therein; and
a plurality of exposure holes penetrating one surface of the body and provided to expose the receiving space,
wherein in the exposure hole,
a matte portion formed along the perimeter of the inner surface of the exposure hole and diffusely reflecting light incident on the inner surface of the exposure hole is formed.
